# EUROPÄISCHE PATENTANMELDUNG

(11) **EP 2 683 118 A1**
(43) Veröffentlichungstag der Anmeldung: **08.01.2014**
(21) Anmeldenummer: 13003108.1
(22) Anmeldetag: 19.06.2013
(51) Int. Cl.: H04L 12/28

(54) **Gebäudeautomationssystem**

(30) Priorität: 05.07.2012 DE 102012013281
(71) Anmelder: ABB AG, 68309 Mannheim (DE)
(72) Erfinder: Kruppa, Christian, 44651 Herne (DE); Krummel, Holger, 58515 Lüdenscheid (DE); Zierach, Falk, 58513 Lüdenscheid (DE)

(57) **Zusammenfassung**

Es wird ein Gebäudeautomationssystem (1) eines Gebäudes (2) mit mehreren Elektro-Installationsgeräten, wie insbesondere Sensoren (4, 5, 6, 7) und Aktoren (9, 10, 11, 12, 13), vorgeschlagen, wobei die logischen Funktionen für die Verknüpfung der Geräte miteinander auf einem Internet-Diensteserver (22) mit zugeordnetem Internet-Datenspeicher (23) abgespeichert sind und wobei Internet-Koppeleinheiten (25) der Geräte die Voraussetzung für erforderliche Internet-Verbindungen (24) schaffen.

## Beschreibung

Die Erfindung betrifft ein Gebäudeautomationssystem mit mehreren ElektroInstallationsgeräten, wie insbesondere Sensoren und Aktoren.

Aus der DE 102 41 875 B4 ist ein Datenverarbeitungssystem für ein elektrisches Gebäude-Installationsbussystem, insbesondere für den Europäischen Installationsbus bekannt, wobei intelligente elektrische Geräte zur Steuerung und/oder Kommunikation über einen Installationsbus verbunden sind, mit einem einerseits an den Installationsbus und andererseits an mindestens ein Datennetzwerk anschließbaren intelligenten Kontrollgerät, welches über den Installationsbus selbsttätig bestimmte Betriebsdaten der Geräte empfängt und speichert und zur Kommunikation über das Datennetzwerk zur Abfrage durch an das Datennetzwerk angeschlossene Anwendergeräte bereitstellt. Das Kontrollgerät ist einerseits über das Datennetzwerk bezüglich seiner Funktionen fernbedienbar und gegebenenfalls fernkonfigurierbar sowie andererseits - beispielsweise zur Erweiterung oder Änderung seines Funktionsspektrums - über das Datennetzwerk updatefähig. Das Kontrollgerät ist an ein internes Datennetzwerk und/oder ein externes Datennetzwerk, insbesondere an das Internet, anschließbar.

Aus der DE 102 41 875 B4 ist ein Datenverarbeitungssystem für ein Datennetzwerk, insbesondere zur Internet-/Intranet-Nutzung, bekannt, wobei in einem zentralen Datenbank-Rechner über das Datennetzwerk selbsttätig in bestimmten Zeitabständen jeweils eine Vielzahl von aktuellen Informationsdaten von mindestens einem, insbesondere mehreren bestimmten Netzwerk-Anbieterrechnern gesammelt wird. Mit einem benutzerseitigen intelligenten Abfragegerät sind beliebige Einzel- oder Sammelinformationen aus der in dem Datenbank-Rechner zur Verfügung stehenden Vielzahl von Informationsdaten auswählbar und anhand eines der Auswahl entsprechenden Benutzerprofils zyklisch oder zu beliebigen Zeiten aus dem Datenbank-Rechner abrufbar.

Ein Gebäudeautomationssystem besteht im allgemeinen Fall aus Elektro-Installationsgeräten, wie insbesondere Sensoren und Aktoren, die über logische Funktionen miteinander verknüpft sind. Diese logischen Funktionen werden in der Regel auf ein Bus- oder Funksystem abgebildet. Bei einem derartigen Gebäudeautomationssystem ist die Programmierung oftmals zeitlich mit der Installation verknüpft und wird durch dieselbe Elektrofachkraft ausgeführt. Die durchgeführte Programmierung kann verloren werden, wenn sie nicht ausfallsicher abgespeichert wird. Zudem sind die Elektro-Installationsgeräte relativ komplex, da sie über eine reine Sensor- bzw. Aktor-Funktion hinaus zusätzlich auch eine logische Steuerung beinhalten (beispielsweise bei der Konnex-Terminologie: Applikation, Parameter).

Der Erfindung liegt die Aufgabe zugrunde, ein optimiertes Gebäudeautomationssystem anzugeben.

Diese Aufgabe wird erfindungsgemäß gelöst durch ein Gebäudeautomationssystem eines Gebäudes mit mehreren Elektro-Installationsgeräten, wie insbesondere Sensoren und Aktoren, wobei die logischen Funktionen für die Verknüpfung der Geräte miteinander auf einem Internet-Diensteserver mit zugeordnetem Internet-Datenspeicher abgespeichert sind, und wobei Internet-Koppeleinheiten der Geräte die Voraussetzung für erforderliche Internet-Verbindungen schaffen.

Die mit der Erfindung erzielbaren Vorteile bestehen insbesondere darin, dass die Elektro-Installationsgeräte - wie Sensoren und Aktoren - des Gebäudeautomationssystems kein eigenes Gebäude-internes Bussystem benötigen, sondern stattdessen mit einem Internet-Diensteserver verbunden sind. Alle durchgeführten Programmierungen und Konfigurationen der logischen Steuerung des Gebäudeautomatisierungssystems sind ausfallsicher auf dem Internet-Diensteserver mit Internet-Datenspeicher abgespeichert. Zur Programmierung ist nicht zwingend eine Elektrofachkraft erforderlich, vielmehr kann die Programmierung auch durch den Endkunden / Hausbesitzer selbst vorgenommen werden. Spätere Nachinstallationen von Elektro-Installationsgeräten sind hinsichtlich der Programmierung relativ einfach und unkompliziert möglich. Des Weiteren sind logische Verknüpfungen über mehrere separate Gebäudeautomationssysteme hinweg realisierbar.

Vorzugsweise ist beim vorgeschlagenen Gebäudeautomationssystem zumindest ein Internetgerät, wie PC / Webbrowser, zur Konfiguration, Programmierung und Veränderung der logischen Funktionen des Gebäudeautomationssystems, optional auch zur Analyse und zur Aufbereitung erfasster Daten, vorgesehen.

Des Weiteren ist zumindest eine außerhalb des Gebäudes befindliche Internetbasierte Informationsquelle in das Gebäudeautomationssystem eingebunden, beispielsweise ein Wettervorhersagedienst.

In weiterer Ausgestaltung ist zumindest ein außerhalb des Gebäudes befindlicher Internet-basierter Sensor in das Gebäudeautomationssystem eingebunden, beispielsweise ein Smartphone.

Zweckmäßig ist ferner zumindest ein außerhalb des Gebäudes befindlicher Internetbasierter Empfänger in das Gebäudeautomationssystem eingebunden, beispielsweise eine Meldezentrale eines Sicherheitsunternehmens.

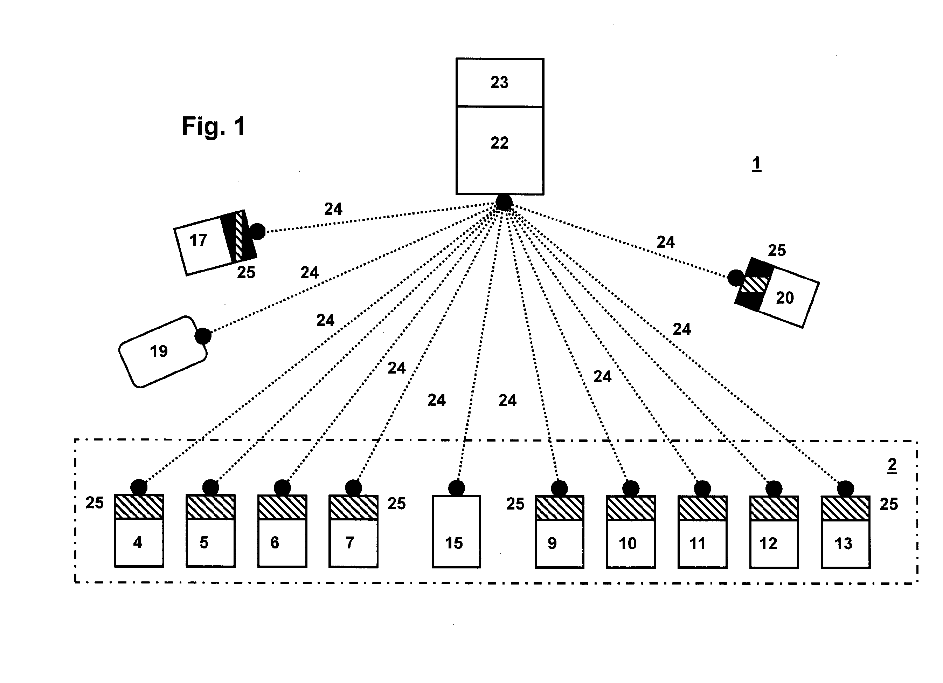

Die Erfindung wird nachstehend an Hand des in der Zeichnung dargestellten Ausführungsbeispieles erläutert. In Fig. 1 ist ein Gebäudeautomationssystem 1 dargestellt, welches
- eine Vielzahl von innerhalb eines Gebäudes 2 befindlicher Sensoren 4, 5, 6, 7 usw.,
- eine Vielzahl von innerhalb eines Gebäudes 2 befindlicher Aktoren 9, 10, 11, 12, 13, usw.,
- zumindest ein Internetgerät 15,
- einen außerhalb des Gebäudes 2 befindlichen Internet-Diensteserver 22,
- einen außerhalb des Gebäudes 2 befindlichen, dem Internet-Diensteserver 22 zugeordneten Internet-Datenspeicher 23,
- optional zumindest eine Internet-basierte Informationsquelle 17 außerhalb des Gebäudes 2,
- optional zumindest einen außerhalb des Gebäudes 2 befindlichen, Internetbasierten Sensor 19,
- optional zumindest einen außerhalb des Gebäudes 2 befindlichen Internetbasierten Empfänger 20
   umfasst.

Dabei erfolgt die Kommunikation zwischen dem Internet-Diensteserver 22 einerseits und den Elektro-Installationsgeräten, d. h. Sensoren 4, 5, 6, 7 und Aktoren 9, 10, 11, 12, 13, dem Internetgerät 15, der mindestens einen optionalen Internet-basierten Informationsquelle 17 und dem mindestens einen optionalen Internet-basierten Empfänger(n) 20 andererseits jeweils über Internet-Verbindungen, pauschal mit Ziffer 24 gekennzeichnet, wozu diese Geräte jeweils eine Internet-Koppeleinheit besitzen, pauschal mit Ziffer 25 bezeichnet. Die Kommunikation zwischen dem Internet-Diensteserver 22 und dem Internet-basierten Sensor 19 erfolgt ebenfalls über eine Internet-Verbindung 24.

Dabei kann der Sensor 4 beispielsweise als Temperaturfühler, der Sensor 5 beispielsweise als Bewegungsmelder, der Sensor 6 beispielsweise als Präsenzmelder und der Sensor 7 beispielsweise als Fensterbruchsensor ausgeführt sein. In einem realen Gebäudeautomationssystem 1 ist selbstverständlich eine Vielzahl weiterer Sensoren vorgesehen.

In ähnlicher Weise kann der Aktor 9 beispielsweise als Schaltaktor für eine Außenbeleuchtung, der Aktor 10 beispielsweise als Dimmaktor für eine Leuchte, der Aktor 11 beispielsweise als Jalousieaktor für eine Jalousie, der Aktor 12 beispielsweise als Stellantrieb für die Heizung und der Aktor 13 beispielsweise als Garagentorantrieb ausgeführt sein. In einem realen Gebäudeautomationssystem 1 ist selbstverständlich eine Vielzahl weiterer Aktoren vorgesehen.

Das Internetgerät 15, insbesondere PC / Webbrowser, dient allgemein zur Konfiguration, Programmierung und Veränderung des Gebäudeautomationssystems sowie zur Analyse, grafischen Aufbereitung usw. der erfassten Daten. Die Internet-basierte Informationsquelle 17 außerhalb des Gebäudes 2 kann beispielsweise in Form eines Wettervorhersagedienstes ausgeführt sein. Ein Internet-basierter Sensor 19 außerhalb des Gebäudes kann beispielsweise in Form eines Smartphones oder Smartpads oder Tablet-PCs ausgeführt sein. Der Internet-basierte Empfänger 20 außerhalb des Gebäudes kann beispielsweise eine Meldezentrale eines Sicherheitsunternehmens darstellen. Der Internet-Diensteserver 22 weist vorzugsweise eine automatische Datensicherung auf.

Wie im Ausführungsbeispiel erläutert, sind Sensoren beispielsweise als Schalter, Temperaturfühler oder Bewegungsmelder ausgeführt. Beispiele für Aktoren sind Schalt- oder Dimmaktoren für Leuchten, Jalousieaktoren für Rollladen oder Stellantriebe für Heizungen. Mit Hilfe der logischen Funktionen werden Sensoren und Aktoren verknüpft, zum Beispiel in der Form von "Wenn-dann-Entscheidungen", beispielsweise "wenn der Sensor 4, d. h. der Temperaturfühler, mehr als 20° Celsius misst, wird der Aktor 12 angesteuert, d. h. der Stellantrieb für die Heizung zugefahren.

Das vorgeschlagene Gebäudeautomationssystem 1 verlagert die logischen Funktionen des Gebäudeautomationssystems auf den Internet-Diensteserver 22 in das Internet und ermöglicht so unter Anderem vorteilhaft
- die Einbindung von Internet-basierten Informationen außerhalb des Gebäudes 2 in die logischen Funktionen des Gebäudeautomationssystems 2, beispielsweise die Einbeziehung von Wettervorhersagediensten mittels der Internet-basierten Informationsquelle 17 zur Heizungssteuerung über den Aktor 12;
- die Einbindung von Sensoren außerhalb des Gebäudes 2, die ebenfalls typischerweise über das Internet angebunden sind, in die logischen Funktionen des Gebäudeautomationssystems 2, beispielsweise des Internet-basierten Sensors 19 in Form eines Smartphones des Endkunden / Hausbesitzers als Positionsangabegerät zur automatischen Öffnung der Garagentores mittels des Aktors 13 und/oder des automatischen Einschaltens der Außenbeleuchtung mittels des Aktors 9;
- die Nutzung der Sensor-Informationen des Gebäudes 2 auch außerhalb des Gebäudes 2, beispielsweise meldet der Sensor 7, d. h. der Fensterbruchsensor, seinen aktuellen Status an ein Sicherheitsunternehmen - siehe den Internet-basierten Empfänger 20;
- einen einfachen Zugriff auf das Gebäudeautomationssystem 1 des Gebäudes 2 - repräsentiert durch seine Sensoren und Aktoren - über Internet-fähige Geräte, zum Beispiel Smartphones, Smartpads, Tablet-PCs, siehe Internet-basierter Sensor 19.

Die Verlagerung der logischen Funktionen (Verknüpfungen) des Gebäudeautomationssystems 1 auf den Internet-Diensteserver 22 ermöglicht ferner vorteilhaft
- die Konfiguration und Veränderung der logischen Funktionen des Gebäudeautomationssystems 2 mit typischen Internetgeräten 15, beispielsweise PC / Webbrowser, so dass weder ein spezielles Programmiergerät im Gebäude/Haus verfügbar sein muss, noch dieses Programmiergerät durch eine Elektrofachkraft vor Ort programmiert werden muss;
- eine automatische Aufzeichnung von Ereignissen "Sensor-/Aktor-Events" des Gebäudeautomationssystems 2 auf einem theoretisch unbegrenzten Massenspeicher - siehe den Internet-Datenspeicher 23 - und eine anschließende Analyse / grafische Aufbereitung - siehe das Internetgerät 15;
- eine automatische Datensicherung, da die logischen Funktionen nicht auf den Geräten im Gebäude, sondern auf dem backup-fähigen Internet-Diensteserver 22 mit Internet-Datenspeicher gespeichert sind;
- übergreifende logische Verknüpfungen über mehrere separate Gebäudeautomationssysteme hinweg, zum Beispiel kann aufgrund der Aktivität von Präsenzmeldern - siehe die Sensoren 6 - am Morgen der Stromverbrauch der nächsten Minuten durch das Elektroversorgungsunternehmen EVU prognostiziert werden ("Schwarmintelligenz"). Gegebenenfalls kann in diesem Zusammenhang das Elektroversorgungsunternehmen EVU auch die entsprechende Infrastruktur, insbesondere im Hinblick auf die angesprochenen Präsenzmelder finanziell unterstützen.

Aus der Erfindung resultiert eine Aufteilung der im Zusammenhang mit dem Gebäudeautomationssystem notwendigen Arbeitsleistung in die beiden Teilleistungen
- Installation der Sensoren/Aktoren im Haus und
- Eingabe von logischen Funktionen (logische Verknüpfung zwischen den Geräten).

Beide Teilleistungen müssen nicht mehr zwangsläufig von einer einzigen Elektrofachkraft oder einer einzigen Fachfirma, durchgeführt werden, sondern können unabhängig voneinander ausgeführt werden. Die logische Verknüpfung, d. h. Einrichtung der logischen Funktionen, kann auch durch den Endkunden / Hausbesitzer selbst vorgenommen werden. Beide Teilleistungen können unabhängig voneinander entwickelt und durchgeführt werden, beispielsweise kann eine Nachinstallation von Sensoren erfolgen, die erst zu einem späteren Zeitpunkt logisch verknüpft werden.

Des Weiteren können einmal eingerichtete logische Funktionen leicht auf beliebige Sensor-/Aktor-Kombinationen angewendet werden ("kopieren"). Ebenso ist es möglich, eine beliebige Anzahl Sensoren/Aktoren einer logischen Funktion zuzuordnen. Schließlich können logische Funktionen selbst beliebig kaskadiert werden.

### Bezugszeichenliste

- 1: Gebäudeautomationssystem
- 2: Gebäude
- 3: -
- 4: Sensor (beispielsweise Temperaturfühler)
- 5: Sensor (beispielsweise Bewegungsmelder)
- 6: Sensor (beispielsweise Präsenzmelder)
- 7: Sensor (beispielsweise Fensterbruchsensor)
- 8: -
- 9: Aktor (beispielsweise Schaltaktor für eine Außenbeleuchtung)
- 10: Aktor (beispielsweise Dimmaktor für eine Leuchte)
- 11: Aktor (beispielsweise Jalousieaktor für eine Jalousie)
- 12: Aktor (beispielsweise Stellantrieb für die Heizung)
- 13: Aktor (beispielsweise Garagentorantrieb)
- 14: -
- 15: Internetgerät (PC / Webbrowser) zur Konfiguration, Programmierung, Veränderung, Analyse, grafischen Aufbereitung erfasster Daten
- 16: -
- 17: Internet-basierte Informationsquelle außerhalb des Gebäudes (beispielsweise ein Wettervorhersagedienst)
- 18: -
- 19: Internet-basierter Sensor außerhalb des Gebäudes (beispielsweise Smartphone)
- 20: Internet-basierter Empfänger außerhalb des Gebäudes (beispielsweise Meldezentrale eines Sicherheitsunternehmens)
- 21: -
- 22: Internet-Diensteserver mit automatischer Datensicherung
- 23: Internet-Datenspeicher (zugeordnet zum Internet-Diensteserver)
- 24: Internet-Verbindung
- 25: Internet-Koppeleinheit

## Patentansprüche

1. Gebäudeautomationssystem (1) eines Gebäudes (2) mit mehreren ElektroInstallationsgeräten, wie insbesondere Sensoren (4, 5, 6, 7) und Aktoren (9, 10, 11, 12, 13), **dadurch gekennzeichnet, dass** die logischen Funktionen für die Verknüpfung der Geräte miteinander auf einem Internet-Diensteserver (22) mit zugeordnetem Internet-Datenspeicher (23) abgespeichert sind, wobei Internet-Koppeleinheiten (25) der Geräte die Voraussetzung für erforderliche Internet-Verbindungen (24) schaffen.

2. Gebäudeautomationssystem (1) nach Anspruch 1, **dadurch gekennzeichnet, dass** zumindest ein Internetgerät (5) zur Konfiguration, Programmierung und Veränderung der logischen Funktionen vorgesehen ist.

3. Gebäudeautomationssystem (1) nach Anspruch 1, **dadurch gekennzeichnet, dass** zumindest eine außerhalb des Gebäudes (2) befindliche, Internet-basierte Informationsquelle (17) eingebunden ist.

4. Gebäudeautomationssystem (1) nach Anspruch 1, **dadurch gekennzeichnet, dass** zumindest ein außerhalb des Gebäudes (2) befindlicher Internet-basierter Sensor (19) eingebunden ist.

5. Gebäudeautomationssystem (1) nach Anspruch 1, **dadurch gekennzeichnet, dass** zumindest ein außerhalb des Gebäudes (2) befindlicher Internet-basierter Empfänger (20) eingebunden ist.
